# EUROPEAN PATENT APPLICATION

(11) **EP 1 637 826 A1**
(43) Date of publication of application: **22.03.2006**
(21) Application number: 05101859.6
(22) Date of filing: 10.03.2005
(51) Int. Cl.: F41A 23/18, A47B 81/00

(54) **Portable folding field stand for holding paintball markers**

(30) Priority: 17.09.2004 US 610694
(71) Applicant: International Paintball Systems, LLC, Auburn, NH 03032 (US)
(72) Inventor: MacDonald, John, gRaymond, NH New Hampshire 03077 (US); MacDonald, Steven, Auburn, NH New Hampshire 03032 (US)
(74) Representative: Loven, Keith James

(57) **Abstract**

A portable folding field stand for supporting multiple fully assembled paintball markers by their barrels and air tanks in a horizontal, upright position; consisting of a rectangular base section (12); a barrel support bulkhead (14); and a tank support bulkhead (18). The base section (12) is hingedly attached along one edge (16) to the barrel support bulkhead (14) edge and along an opposing edge (20) to the tank support bulkhead (18). The tank support bulkhead (18) has uniformly spaced tank support yokes (28), and the barrel support bulkhead (14) has corresponding barrel support yokes (22). The bulkheads are foldable on the base section between two positions, open for use and closed for transport or storage. Both bulkheads have L shaped profiles that extend the available underside area of support when open and provide a suitcase-like profile to the stand when closed. The barrel support yokes (22) are individually vertically adjustable to accommodate different markers.

## Description

### FIELD OF THE INVENTION

This invention relates to accessories for paintball games; and more particular to portable folding field stands for holding paintball markers during field use.

### BACKGROUND ART

Paintball is a relatively recent team sport phenomena with police and military cross-over training aspects. The basic concept consists of arming individuals with paintball markers capable of propelling a small bag of paint up to one hundred yards or more, organizing the individuals into teams, and pitting the teams against each other to see which team can "score" the first or most paintball hits on the opposing team in a scheduled event. Games are typically played by rounds of two competing teams in an out of doors area providing limited opportunities for hiding and/or protection from the opposing shooters. Teams are typically 3 to 5 players; each player being armed with a paintball marker. Organized teams and tournaments are commonplace. A significant industry has developed to support the sport with a variety of types and styles of paintball markers and accessories.

The paintball markers themselves have developed into sophisticated, gas-powered devices capable of holding and shooting hundreds of rounds of standard size paintballs in the space of a few minutes. The average cost of a tournament-class marker, fully configured for the game, is now approaching $2000, a significant investment for most players.

A problem that plagues players in the field is how and where to place the markers temporarily as between rounds or matches. Each team may have a table at a central staging point for team use, but 5 fully configured markers laid down on a table fully covers the table, making it useless for other purposes. As soon as the team moves away from the table, the players normally have no place other than the ground to temporarily place their expensive markers. In a high density, high excitement, tournament environment, markers are not infrequently damaged or even literally destroyed by being stepped on. The expense and the disruption to the team's participation could be defined as "problematic", but one can easily speculate that more descriptive language might be used by a player and his team-mates during the height of a tournament, when a marker is unexpected disabled for this reason.

A screening search of commercial solutions disclosed pipe-like stanchions for holding a single marker, some wall-mounted, some base-mounted, some clearly intended to be display stands, some intended to be field stands. One structure resembled a pair of deer antlers configured to hold two markers by their barrels and receivers aft of their handles. A structure consisting of a vertical pipe on a base plate, the pipe configured with three sets of figures, was described as a "paint gun holder stand", although the manner of holding the marker was uncertain from the disclosure.

None of the devices known to the Applicants offers a particularly useful, compelling resolution to the problem.

### SUMMARY OF THE INVENTION

The invention, simply explained, is a portable folding field stand for paintball markers, particularly engineered with a novel combination of unique features not previously available to meet the needs of the paintball tournament team.

Accordingly, the invention provides a portable folding field stand for supporting a fully assembled paintball marker by its barrel and air tank in a horizontal, upright position, comprising a rectangular base section, said base section hingedly attached along one edge to a barrel support bulkhead, said base section hingedly attached along an opposing edge to a tank support bulkhead, said tank support bulkhead configured with at least one air tank support yoke, said barrel support bulkhead configured with a corresponding number and position of barrel support yokes, said bulkheads being foldable on said base section between an open position wherein said barrel support bulkhead and said tank support bulkhead are each erected to respective vertical positions, and a closed position wherein said bulkheads are nested together over said base plate.

Preferably, the base section comprises two parallel base bars, each end of each said base bar being configured with a hinge point. The barrel support bulkhead preferably comprises an L shaped profile, the lower end thereof being hingedly connected to said base section; said tank support bulkhead comprising an L shaped profile, the lower end thereof being hingedly connected to said base section.

The barrel support bulkhead may comprise a handle located on the underside of said L shaped profile.

In one embodiment, the underside area of support for said field stand may be extended by unfolding of said barrel support bulkhead and said tank support bulkhead.

The barrel support yokes may comprise individual barrel supports attached to said barrel support bulkhead and having means for vertical adjustment thereon. The means for vertical adjustment may comprise a slot in said barrel support through which a knob screw attaches to said barrel support bulkhead.

The tank support yoke preferably comprises a channel with a strip of non-slip material inlaid therein to less than its full thickness such that it remains partially exposed for contacting and gripping said air tank.

The stand may comprise a strap and fastener for securing a paintball marker thereto. A latching mechanism may be provided by which the stand may be secured in the closed position. Alternatively, or additionally, a latching mechanism may be provided to secure the stand in the open position thereof. Folding legs may be provided.

One aspect of the invention provides a portable folding field stand for supporting multiple fully assembled paintball markers by their barrels and air tanks in a horizontal, upright position, comprising a base section, multiple, individual, foldable front end subsections, one for each marker position, all said subsections hingedly connected to one edge of said common base section, each said subsection having a vertically adjustable barrel support, and a corresponding number of individual, foldable back end subsections, one for each marker position, all subsections hingedly connected to an opposing edge of said common base section, each subsection having a tank support yoke, each said front end subsection and said back end subsection being foldable on said common base between an open, upright position for support of said markers and a closed position over said common base section.

The invention provides a lightweight, compact, portable field stand that will provide for organized, temporary placement with relatively better physical security from accidental damage than random placement on the ground, of 3 to 5 paintball markers fully configured for use with their paintball reservoirs and air tanks attached.

The invention provides for a degree of flexibility and adjustment in the structure as deployed, so that it will accommodate some variation in size and dimension from one paintball marker to another.

A hand hold may be incorporated in the field stand that will not interfere with the storage, transporting of or deployment and use of the device.

The field support stand can support the paintball markers in a conventional top-up, barrel level attitude, from which it can be easily grasped at a balance point by the user and removed from the support stand. The stand can provide a sufficient area of support, when disposed on a table top or on the ground, to ensure stability of the stand when loaded with markers.

Other objects and advantages of the present invention will become readily apparent to those skilled in this art from the following detailed description, wherein we have shown and described only a preferred embodiment of the invention, simply by way of illustration of the best mode contemplated by us on carrying out our invention.

### BRIEF DESCRIPTION OF THE DRAWINGS

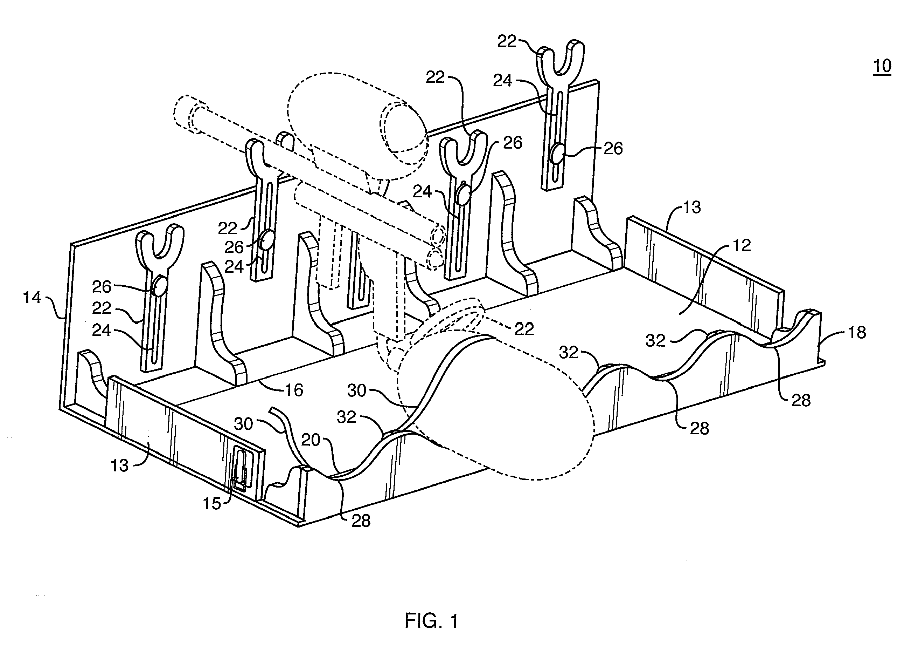

Fig. 1 is a perspective view of one embodiment of an open-folded or fully deployed portable, folding field stand with vertically adjustable barrel yokes and a hand holding opening in the base plate, for holding up to 5 paintball markers fully configured with paintball reservoir and compressed air tank, side by side.

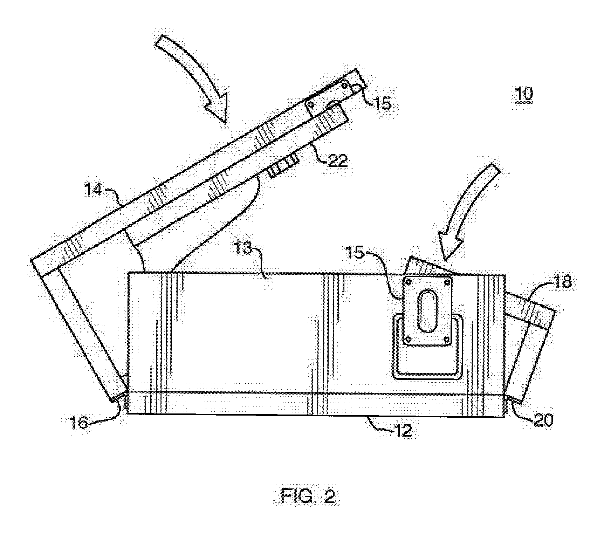

Fig. 2 is a perspective view of the portable, folding field stand of Fig. 1, in a fully folded state for transport and storage.

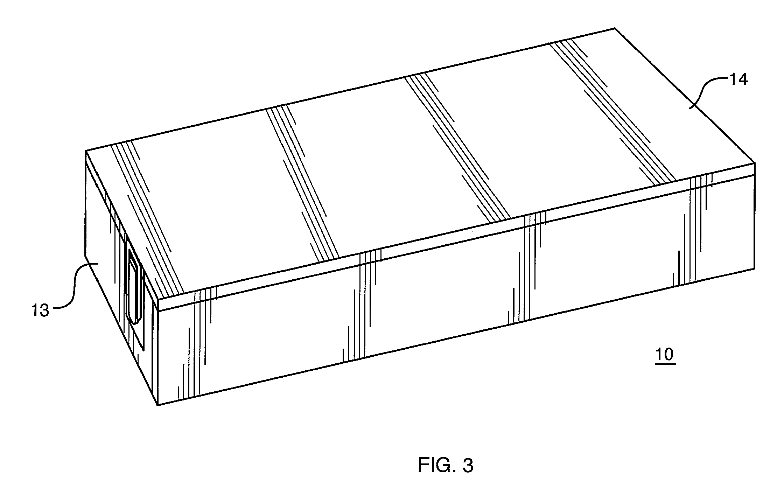

Fig. 3 is a perspective view of the portable, folding field stand of Figs. 1 and 2, in a partially folded state illustrating the folding action by which the field stand is deployed.

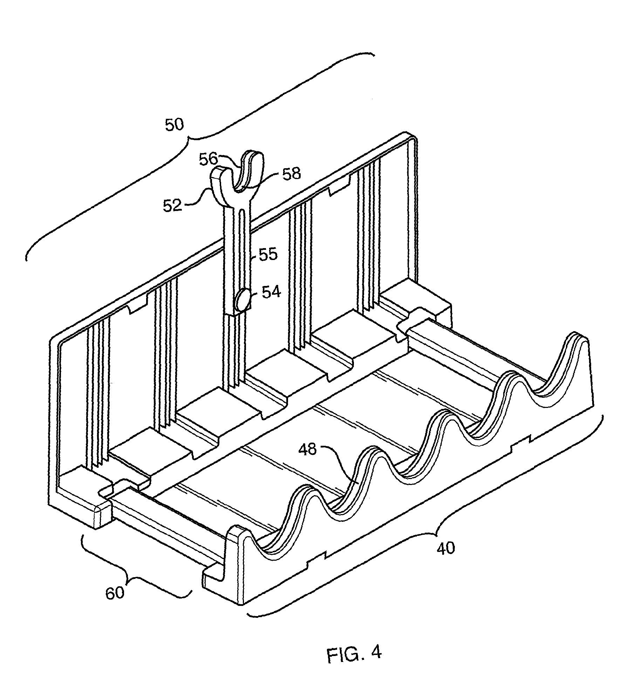

Fig. 4 is a perspective topside view of one embodiment of a fully assembled, open-folded or fully deployed portable, folding field stand with a front end barrel support section with its vertically adjustable elliptical barrel yokes and back end tank support section with elliptical tank yokes, for holding up to 5 paintball markers fully configured with paintball reservoir and compressed air tank, side by side with an upright orientation.

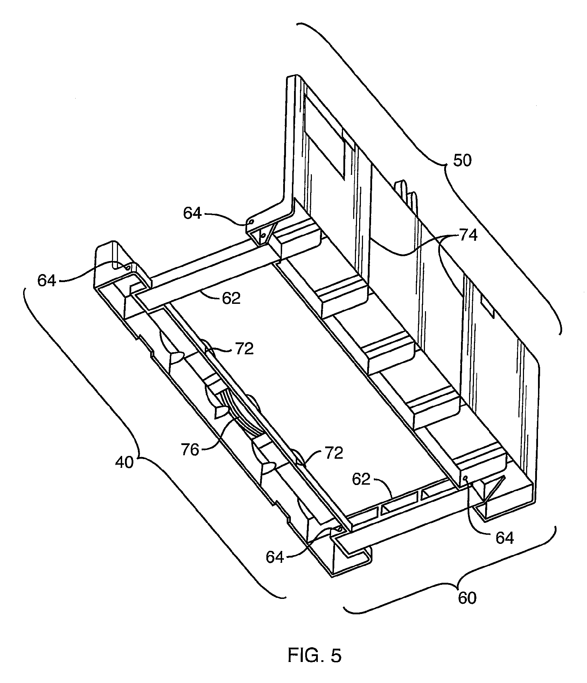

Fig. 5 is a perspective underside view of the portable, folding field stand of Fig. 4, illustrating the pivot points for folding and the two base bars that connect the tank support section to the barrel support section, and revealing the hand strap on the underside of the tank support section by which the unit is handled when folded.

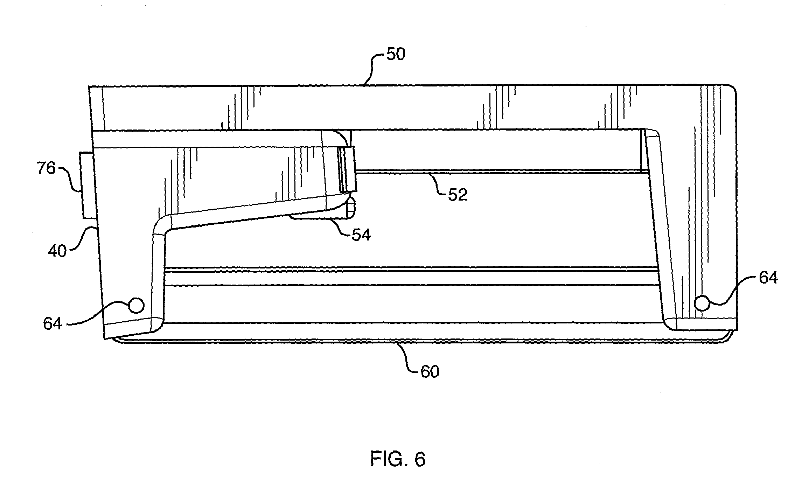

Fig. 6 is an end view of the portable, folding field stand of Figs. 4 and 5, in a fully folded state illustrating the folding action by which the tank support section and the barrel support section nest together in proximity to the base bars, exposing the underside of the tank support section with its hand strap for handling the unit in suitcase-like fashion.

### DESCRIPTION OF THE PREFERRED EMBODIMENT

The invention is susceptible of many embodiments. Illustrative of one embodiment of the invention, there is shown in Fig. 1 a perspective view of an open-folded or fully deployed portable, folding field stand 10. Figs 2 and 3 show field stand 10 partially folded and fully folded respectively, as for transport and storage. Field stand 10 consists of a base plate 12, with a barrel end bulkhead 14 connected by hinges along hinge line 16, and a tank end bulkhead 18 connected by hinges along hinge line 20.

There is an optional hand holding opening 22 in base plate 12, which provides for an easy grip on the stand when folded, for transport and storage, without protruding or interfering with set up and without requirement for additional structure. Base plate 12 is configured with end walls 13 on either end, which when field stand 10 is folded, provide a substantially full enclosure of the interior space. In some embodiments, such end walls are not employed. Base plate 12 may be further configured with folding legs, such that it can be deployed at a fixed or adjustable height above ground. There may be interior pockets, compartments or other provisions for holding or storing selected smaller accessories, papers, etc., so long as they not interfere with placement of paintball markers when open, and folding and closure of the field stand when not in use. Latches 15 are used to secure the field stand in a folded or stowed position.

Barrel end bulkhead 14 is configured with 5, uniformly spaced apart, vertically adjustable barrel yokes 22, each having a slot 24 through which screw knob 26 secures it to the bulkhead. Barrel yokes 22 are adjusted fully downward for folding the stand for transport, and are adjustable upward within the range of the slot, when the stand is folded open for use, to fit the geometry of the paintball marker intended for placement in that position. Barrel yokes 22 and/or bulkhead 14 may be optionally provided with security straps or holding mechanisms for latching the barrels of paintball markers within their respective yokes.

The tank end bulkhead 18 is configured with 5 relatively larger yokes 28, of a radius slightly larger than the radius of commonly available compressed air tanks normally used on contemporary paintball markers. Retainer straps 30 are secured by one end to the interior side of tank end bulkhead 18 at yoke partitions 32, for optionally securing a paintball marker by its tank within its respective yoke 28; the other strap end being attachable over a tank to an adjacent yoke partition 32. Other means for securing the tanks of the paintball markers within their slots, such as clips, hook and loop fastener material, and the like, are all within the scope of the invention, so long as they not interfere with use, folding and closure of the field stand.

The embodiment illustrated holds up to 5 paintball markers, ideal for a 5-person tournament team, but other embodiments of the portable, folding field stand of the invention may hold more or fewer markers. The field stand may be constructed of various materials by various conventional means, although light weight, as is realizable with hollow or blow-moulded plastic fabrication, is an objective. Hinges may be separate devices or be incorporated as by interlocking structure between the base plate and bulkheads, or by living hinges as are known in the plastics industry.

Another embodiment is illustrated in Figs. 4-6, consisting of three principle components, a tank support back end 40, and barrel support front end 50, which are foldably connected to opposing sides of base section 60. The paintball marker back end 40 and front end 50 each fold about 90 degrees between a nested closed position overlying the base section 60, forming a suitcase-like profile; and an open position where both ends 40 and 50 rise substantially at right angles from the base section. The external right angle configuration of both ends 40 and 50 can be seen to contribute to providing an increased width of the footprint for the field stand when folded fully open for use, more suitable to the length requirements for supporting a marker by its tank and barrel, then closing with about a right angle folding motion of each end 40 and 50 into a smaller, more compact, rectangular profile, as in Fig. 6, when closed for transport or storage.

While the embodiment of Figs. 4-6 is illustrated as a five marker field stand, it will be apparent that the major components can be designed for assembly into a field stand with a smaller or larger number of marker holding positions, for one or more up to a practical limit of field stand length, preferably not more than 10 or 12 markers at most. Preferred embodiments provide for moulded components that can be assembled into a 3 or 5 marker field stand, by use of a centre section in two of the three major components that can be omitted for a 3 marker field stand or included to make a 5 marker stand. Other structural and operating details are the same whether for 3 and 5 marker stands. Details are illustrated in the figures and further described below.

In yet another embodiment, not shown but easily understood in light of this disclosure, barrel support front end 50 may be divided into individual, foldable front end subsections, one for each marker position, all subsections hingedly connected to a common base section, where each subsection has its own vertically adjustable barrel support as is further described below. Alternatively or in combination, tank support back end 40 may be divided into individual, foldable back end subsections, one for each marker position, all subsections hingedly connected to the common base section, where each subsection has its own tank support yoke, as is further described below.

Fig. 4 is a perspective topside view of a fully assembled, folded open and fully deployed portable, 5 position folding field stand. It has a front end 50 with an external right angle or L shape profile. The shorter, horizontal portion is hingedly connected to base section 60. The inside wall surface of the longer, vertical portion is equipped with five uniformly spaced, vertically or Y axis adjustable, individual, barrel supports 52, only one of five being shown in this view. The barrel supports 52 are each secured by respective locking knob screws 54 through a vertically elongated slot 55 to the wall of support section 50. Other means of providing stepped or continuous individual vertical height adjustment to the barrel supports relative to front end 50 are within the scope of the invention. For example, a locking mechanism can permit vertical sliding and then securing of the barrel support for the desired height. A screw mechanism may provide rotational height adjustment. There may be selective step placement of the barrel support component within a receiving structure pattern on front end 50, or a stepped pattern provided on the stem of barrel support 52 that locks into a fixed position receiver on front end 50.

The method and structure for providing vertical adjustment may designed to be readily and repeatably adjusted as for accommodating different size markers routinely, or may be intended as a preliminary adjustment not necessarily easy to readjust, for use with a specific marker in a dedicated location in the field stand. Each barrel support 52 is configured with an upwardly open elliptical yoke 56 for receiving and holding a paintball marker barrel of average diameter.

While in this embodiment, front end 50 closes over back end 40, the reverse of this order is within the scope of the invention. Also, it should be noted that in all preferred embodiments, all structural components of front end 50, including its barrel yokes 52 are able to be reduced in height such that front end 50 when folded does not extend past the exposed underside of folded back end 40, or otherwise interfere with the folding of back end 40 into its respective nested or closed position. Back end 40 is likewise limited for all preferred embodiments in its configuration and folding operation so as to not extend beyond or interfere with the folding of front end 50. Exceptions to this preference are never the less within the scope of the invention.

While preferred embodiments are not so equipped, it will be readily appreciated, in light of this disclosure, that there may be individual keeper straps or clips (not shown) provided on either side of yoke 56 on each barrel support 52, which can be secured over the barrel of a marker when placed in position, to prevent casual or unintended displacement of the barrel from the yoke. Alternatively, there may be a common, all marker retention bar or structure (not shown) mounted to front wall 50 so as to span all five barrel supports. There may be incorporated a locking mechanism for securing each or all markers to the stand, operated by any known means such as by keypad, rotary combination or keyed lock.

Also, while not normally necessary, base section 60 or front end 50, and/or in particular, individual barrel supports 52, may incorporate lateral adjustment or displacement of yoke 56 in the Z axis or long axis of the paint marker to accommodate varying lengths and configurations of marker barrels relative to the back end 40 tank support location. This type of embodiment may be realized with a field stand adjustment affecting all five positions by providing for an extendible base section 60 that adjusts the mean distance between back end 40 and front end 50, or a Z axis extendible back wall 40 and/or front wall 50 mechanism that provides functionally the same result.

For individual marker position length adjustment, there may be provided one or a selection of barrel supports 52 covering a useful range of desired fixed length of Z axis bias or yoke offset from its attach point on front end 50, for use in a particular marker position in the field stand. Additionally, a 180 degree rotatable or bimodal means of attachment of this fixed offset type barrel support 52 provides two possible barrel length adjustments with equal and opposite (plus and minus Z axis) offsets from the front end 50. Preferably, if at all, there would be only one barrel support 52 with a small fixed offset, usable by 180 degree rotation in either of a slightly longer or shorter configuration. A more complex embodiment of barrel support 52, not shown and not preferred, may incorporate a limited amount of stepped or continuous Z axis adjustment.

Back end 40 has an external right angle or L-shaped profile, the shorter horizontal portion being hingedly connected to base section 50, and the vertical or wall portion being equipped with five uniformly spaced, upwardly open elliptical tank yokes 46, of fixed geometry such as to accommodate marker tanks of average diameter. The tank yokes 46 are positioned to correspond with respective barrel supports 52 on front end 50 for holding up to 5 paintball markers fully configured with paintball reservoir and compressed air tank, side by side in an upright orientation.

Air tank support yokes 46 and/or barrel support yokes 56 may be configured with a lining or gripping strip 48 and 58 respectively, of rubber or other non-slip material, providing a grip on the loaded marker that inhibits rotation or falling over of the marker in the field stand. Moulded variants of these components may incorporate a channel or track (not shown) into which gripping strip 48 and 58 respectively, may be partially inlaid. Back end 40 may incorporate a continuous channel and a partially inlaid gripping strip 58 spanning all marker positions. Keeper straps and fastening mechanisms such as elastic straps and snaps or hook and loop material may be provided and employed for securing air tanks of markers within their respective tank support yokes.

Fig. 5 is a perspective underside view of the portable, folding field stand of Fig. 4, illustrating the pivot points 64 for folding front end 50 and back end 40 over the two base bars 62 of base section 60. Hand strap 76 is shown on the underside of back end 40, which is exposed to be the top side of the field stand when closed, as is shown in Fig. 6. A hand hold in this position may be flexible or rigid so long as it does not interfere with stable support of the field stand when open and in use. Alternatively or in combination, a similar handle may be incorporated into the underside of front end 50. Alternatively or in addition, handles or grips may be incorporated into either or both the exposed or outboard ends of base section 60 and specifically into base bars 62.

Part lines 72 on back end 40 and 74 on front end 50 indicate the centre section of these components which when omitted, provides for a 3-marker field stand otherwise having the same characteristics of the 5 marker field stand described. The two-unit centre section offers moulding options, or incremental assembly from common parts, of field stand components having positions for 3, 5, 7 and so markers. Variations of this technique are within the scope of the invention.

Fig. 6 is an end view of the portable, folding field stand of Figs. 4 and 5, in a fully folded state illustrating the folding action around pivot points 64 by which the tank support back end 40 and the barrel support front end 50 nest together in proximity to the base section 60, exposing the underside of the tank support section with its hand strap 76 for handling the unit in suitcase-like fashion. Barrel support 52 and knob screw 54 are fully contained within the closed field stand. This profile remains consistent irrespective of the number of marker positions provided.

Injection moulding is a preferred technique for the manufacture of components of the field stand, but fabrication by other means from various materials including wood, metal or plastics is within the scope of the invention.

The invention is susceptible of other embodiments. For example, there is a portable folding field stand for a paintball marker, consisting of a rectangular base plate hingedly attached to a barrel support bulkhead along one edge and hingedly attached to a tank support bulkhead along the opposing edge; where the base and bulkhead are foldable at the edges between an open position and closed position. In opening to the open position, when the base is positioned on the ground or other horizontal surface, the barrel support bulkhead is erected to a vertical plane to provide barrel end support to the paint guns, and the tank support bulkhead is erected to a vertical plane substantially parallel to the other bulkhead, but spaced apart so as to provide tank end support to the paintball markers. In closing the field stand to a closed position the two support bulkheads are folded towards each other and nested together over the base plate so as to form a compact, portable accessory.

The field stand may be configured to hold up to three or five paintball markers or such other number as may be desired. The field stand is configured for holding paintball markers fully configured for use including installation of a compressed air tank and a gravity feed supply system for paintballs. The barrel support bulkhead may have barrel support slots for accommodating the barrel end of a paintball marker. They may be individually vertically adjustable yokes for accommodating variations in height from tank bottom to the underside of the barrel between different paintball markers.

The tank support bulkhead has air tank support slots for accommodating the tank end of a paintball marker. They may be individually adjustable yokes for accommodating variations in tank circumference between different paintball markers. They may be individually vertically adjustable yokes for accommodating variations in tank height from tank bottom to the underside of the barrel between different paintball markers. There may be a security strap or latch mechanism for each marker position for securing the paintball marker to the field stand. It may be a strap attached by one end to the tank support bulkhead and attachable by the other end over the tank of a paintball marker and to the tank support bulkhead on the other side of the tank. It may be a strap or mechanism, alone or in combination with a tank strap, for securing the barrel in its yoke or slot on the barrel support bulkhead.

The two bulkheads may be arranged with alternate barrel and tank yokes such that adjacent paintball markers are held pointed in opposing directions, so long as folding and closure clearances are maintained, as by projections of longer barrel supporting structure mating during folding with respective shorter tank supporting structure.

The major components of the field stand may be hollow plastic structures, fabricated by blow moulding or other techniques. The hinge lines or pivot points may be so called "living hinges" formed in the moulding process, or a pin and hinge-like interconnection between base and bulkhead components, or other known hinge mechanisms commonly used for such tasks.

The base plate or one of the bulkheads may be configured with a hand hold opening for easy lifting and handling of the closed field stand, or it may have a retractable handle or other non-protruding handle structure that does not interfere with placing the field stand base down on the ground or a table or such, and opening the bulkheads without interference with the ground or supporting table other than to provide further support to the opened bulkhead.

The field stand may be configured with latching mechanisms by which it may be secured in the closed position. It may be configured with latching mechanisms by which it may be secured in the open position. It may be configured with folding legs. It may be configured with room for small accessories such that their presence does not otherwise interfere with the folding and functioning of the field stand.

In summary, the invention provides a much more comprehensive solution to the tournament need for a portable, support system for one marker or a team's full complement of paintball markers.

## Claims

1. A portable folding field stand for supporting a fully assembled paintball marker by its barrel and air tank in a horizontal, upright position, comprising a rectangular base section, said base section hingedly attached along one edge to a barrel support bulkhead, said base section hingedly attached along an opposing edge to a tank support bulkhead, said tank support bulkhead configured with at least one air tank support yoke, said barrel support bulkhead configured with a corresponding number and position of barrel support yokes, said bulkheads being foldable on said base section between an open position wherein said barrel support bulkhead and said tank support bulkhead are each erected to respective vertical positions, and a closed position wherein said bulkheads are nested together over said base plate.

2. A portable folding field stand according to Claim 1, said base section comprising two parallel base bars, each end of each said base bar being configured with a hinge point.

3. A portable folding field stand according to Claim 1 or 2, said base section being configured on at least one exposed edge with a handle.

4. A portable folding field stand according to Claim 1, 2 or 3, said barrel support bulkhead comprising an L shaped profile, the lower end thereof being hingedly connected to said base section; said tank support bulkhead comprising an L shaped profile, the lower end thereof being hingedly connected to said base section.

5. A portable folding field stand according to Claim 4, said barrel support bulkhead comprising a handle located on the underside of said L shaped profile.

6. A portable folding field stand according to Claim 4, said tank support bulkhead comprising a handle located on the underside of said L shaped profile.

7. A portable folding field standing according to any preceding claim, the underside area of support for said field stand being extended by unfolding of said barrel support bulkhead and said tank support bulkhead.

8. A portable folding field stand according to any preceding claim, said barrel support yokes comprising individual barrel supports attached to said barrel support bulkhead and having means for vertical adjustment thereon.

9. A portable folding field stand according to Claim 8, said means for vertical adjustment comprising a slot in said barrel support through which a knob screw attaches to said barrel support bulkhead.

10. A portable folding field stand according to any preceding claim, said tank support yoke comprising a channel with a strip of non-slip material inlaid therein to less than its full thickness such that it remains partially exposed for contacting and gripping said air tank.
